Europäisches Patentamt

European Patent Office

Office européen des brevets

(11) Numéro de publication: **0 412 910 A1**

# DEMANDE DE BREVET EUROPEEN

(21) Numéro de dépôt: 90402280.3

(22) Date de dépôt: 09.08.90

(51) Int. Cl.⁵: **E04C 3/28, E04G 23/02, B29C 67/14, B29C 33/36**

(30) Priorité: 09.08.89 FR 8910735

(43) Date de publication de la demande:
13.02.91 Bulletin 91/07

(84) Etats contractants désignés:
AT BE CH DE DK ES GB GR IT LI LU NL SE

(71) Demandeur: SOCIETE D'INSTALLATIONS
PERSONNALISEES ET D'ENTREPRISE
GENERALE SIPEG
Grange de Malassis, CD 40
F-91400 Gometz-la-Ville(FR)

(72) Inventeur: Roux,Paul,Maurice,Marie
30 rue de Damiette
F-91190 Gif Sur Yvette(FR)

(74) Mandataire: Beauchamps, Georges et al
Cabinet Z.Weinstein 20, avenue de Friedland
F-75008 Paris(FR)

(54) Elément de renforcement d'une poutre en bois existante, ses procédés et installation de fabrication, ses utilisations et poutre renforcée ansi obtenue.

(57) Il s'agit d'un élément (1) de renforcement d'une poutre droite existante (20) en bois pour accroître sa résistance mécanique à la flexion.

Cet élément de renfort (1) comporte une plaque allongée (2) en matière synthétique armée de fibres artificielles, comprenant une partie plane (2a) formant âme délimitée d'un côté par une partie marginale conformée en nervure creuse (2b) en forme de U dont l'évidement est rempli par une masse (3) de matière synthétique renforcée de fibres artificielles unidirectionnelles longitudinales, cette masse étant solidaire de ladite plaque.

Cet élément de renfort est applicable notamment au renforcement des entraits (20) de fermettes (33) de charpente de toiture pour l'aménagement de combles dans des maisons individuelles.

FIG. 4

## ELÉMENT DE RENFORCEMENT D'UNE POUTRE EN BOIS EXISTANTE, SES PROCÉDÉS ET INSTALLATION DE FABRICATION, SES UTILISATIONS ET POUTRE RENFORCÉE AINSI OBTENUE.

La présente invention concerne généralement et a essentiellement pour objet, à titre de produit industriel nouveau, un élément de construction destiné en particulier à être rapporté sur une poutre existante sensiblement rectiligne notamment en bois pour accroître sa résistance mécanique à la flexion, un procédé de fabrication de cet élément de construction, une installation pour l'exécution ou la mise en oeuvre de ce procédé, les diverses utilisations de cet élément de construction en particulier dans l'aménagement de combles et la réhabilitation de planchers anciens ainsi qu'à titre de produit industriel nouveau, la poutre ainsi renforcée.

Dans l'art antérieur, on connaît une technique d'aménagement de combles en espaces de logement habitable ou de rangement dans des bâtiments ou édifices analogues et, en particulier, dans des maisons individuelles à charpentes industrielles en bois de toiture généralement à deux ou quatre versants ou pans symétriques en dièdre saillant à fermettes notamment triangulées par exemple en W par contre-fiches au moyen d'une modification et d'une restructuration des fermettes pour créer une ossature porte-plancher en bois composée d'une travure ou d'un gîtage simple de solives parallèles transversalement espacées supportant des lambourdes ou gîtes. Cette méthode connue d'aménagement consiste notamment à :

- renforcer les entraits ou tirants des fermettes sur toute leur longueur d'un mur porteur à l'autre aux moyens de pièces de bois formant liernes simples ou moisées pour rendre les entraits aptes à servir de solives de plancher ;
- liaisonner les entraits avec les arbalétriers par des jambettes de force verticales latérales ;
- assujettir deux poutres latérales horizontales en treillis en bois contre les jambettes de force existantes de part et d'autre du plan vertical longitudinal passant par le faîtage, ces poutres s'étendant d'une part vers le haut jusqu'aux arbalétriers et d'autre part parallèlement aux murs porteurs en étant en appui sur les deux murs pignons opposés et éventuellement sur au moins un poteau intermédiaire, ces poutres étant fixées d'une part aux jambettes de force précitées et d'autre part aux entraits pour soutenir ceux-ci ;
- supprimer les contre-fiches pour dégager un volume libre utilisable en logement ou en rangement ;
- poser, entre les deux poutres en treillis sur les solives ainsi constituées par les entraits renforcés, des lambourdes s'étendant parallèlement aux murs porteurs (transversalement aux entraits) et recevant un plancher ou platelage formé d'un parquet, d'un carrelage, d'un dallage ou analogue.

Cette technique connue souffre en particulier des inconvénients suivants :
- en raison de la longueur de travée ou portée des entraits, le renfort en bois de chaque entrait ne peut pas toujours être réalisé en une seule pièce monobloc en raison notamment des exigences de gabarit de transport mais doit se composer d'au moins deux éléments reliés jointivement bout à bout d'où la présence d'un joint d'assemblage susceptible d'être une cause de faiblesse structurale ;
- la présence de ces renforts en bois augmente sensiblement l'encombrement en hauteur des entraits renforcée d'où une réduction correspondante de l'espace intérieur libre utilisable et du volume aménage ;
- les opérations de manutention, de chargement et de déchargement de ces renforts en bois et les travaux de montage et d'assemblage de ceux-ci sont relativement longs d'où une productivité relativement faible sur le chantier ;
- les portées intérieures sont relativement limitées en raison des exigences imposées par les normes de surcharge édictées par le document technique unifié établi par le Centre Scientifique et Technique du Bâtiment.

L'invention a principalement pour but non seulement de remédier à ces divers inconvénients de la technique antérieure d'aménagement de combles mais aussi de perfectionner la technologie générale de construction de bâtiment. L'invention résout ce problème en créant un élément de construction d'application polyvalente et multiforme, destiné en particulier à être rapporté sur une poutre sensiblement rectiligne existante notamment en bois pour accroître sa résistance mécanique à la flexion, du type en barre droite à section transversale profilée uniforme comprenant une âme plate bordée d'un côté par une membrure longitudinale unilatéralement saillante sensiblement perpendiculairement sur une face de l'âme. Cet élément de construction est caractérisé en ce qu'il est constitué en matériau composite comportant une plaque allongée ou bande en matière synthétique armée d'au moins une nappe de fibres artificielles, à contour apparent latéral au moins approximativement rectangulaire comprenant une partie plate à faces opposées sensiblement planes formant ladite âme, délimitée d'un côté par une partie marginale formant rebord conformée en nervure creuse formant ladite membrure à concavité ouverte, à section transversale par exemple sensiblement rectangulaire en forme de crochet en U dont les deux branches parallèles sensiblement de même longueur sont perpendiculaires au plan de face latérale de la partie plate de préférence sans dépasser de la face plane de partie plate opposée à la convexité de ladite nervure en formant ainsi une rainure dont l'évidement est rempli par un boudin notamment sensiblement parallèlépipédique formé par une masse de matière synthétique renforcée de fibres artificielles unidirectionnelles réparties dans ladite masse et parallèles à la direction longitudinale de ladite nervure, cette masse de remplissage étant solidaire de ladite plaque.

Selon une autre caractéristique de l'invention, la plaque précitée est en matière plastique renforcée à base de mat de fibres de verre textile ou analogues agglomérées par de la résine polyester, phénolique ou équivalente, tandis que la masse de remplissage précitée est de préférence à base de ladite résine renforcée par des fibres de verre textile représentant de préférence environ 50 % en volume de ladite masse.

L'invention se rapporte également à un procédé de fabrication, par moulage, de l'élément de construction précité ainsi qu'à une installation ou un système pour l'exécution du procédé précité.

L'invention concerne, en outre, une utilisation de l'élément de construction précité pour renforcer une poutre de préférence en bois existante déjà à l'état monté notamment dans une charpente de toiture d'un bâtiment ou édifice analogue pour l'aménagement du comble.

L'invention se rapporte également à une utilisation de l'élément de construction dans la réhabilitation de planchers anciens soit pour renforcer de vieilles solives en bois mal équarries ou détériorées ou pour reconstituer la matière bois manquante dans des pièces de structure, qui a éventuellement disparu par endroits en raison de la vétusteté de la construction ou aussi pour renforcer des solives métalliques détériorées par corrosion.

L'invention vise, enfin, une poutre existante formant notamment entrait en bois, renforcée en application d'une utilisation précitée et caractérisée en ce qu'elle comporte une membrure inférieure constituée par ladite poutre proprement dite et au moins un renfort constitué par l'élément de construction précité, assemblé par son âme à ladite poutre contre une grande face latérale longitudinale de celle-ci à l'aide de moyens de fixation tels que boulons et/ou agrafes et/ou clous et/ou collage. Au lieu d'un seul renfort précité, il est avantageux de prévoir deux tels renforts jumelés en moises en étant fixés respectivement aux deux grandes faces parallèles latérales longitudinales opposées de la poutre précitée. Ainsi est créée une nouvelle solive formant poutre composée à membrure inférieure constituée par la poutre existante proprement dite et à membrure supérieure formée par la membrure de l'élément de renfort en matière composite précité.

L'invention offre les avantages technico-économiques suivants :
- suppression du joint d'assemblage dans le renfort en bois de la technique antérieure avec élimination concomitante du risque correspondant de sinistre dans le cadre de la garantie décennale imcombant à l'entrepreneur et amélioration simultannée de la qualité de la construction ;
- les propriétés physico-chimiques et caractéristiques mécaniques du matériau composite de l'élément de construction conforme à l'invention permettent, pour une même flèche acceptable d'entrait, d'obtenir une réduction de la hauteur de renfort d'où l'obtention d'un espace libre utile et d'un volume aménagé plus grands donc un confort accru ;
- la poutre renforcée autorise de très grandes portées en respectant les normes de surcharge imposées par la réglementation officielle ;
- bien que le matériau composite du renfort conforme à l'invention soit plus dense que le bois, ce renfort est moins long puisque s'étendant seulement entre les deux poutres en treillis précitées, de sorte qu'il est beaucoup moins volumineux ou encombrants à caractéristiques techniques égales donc plus léger à manutentionner sur le chantier ;
- la manutention ainsi que les travaux de montage et d'assemblage seront plus rapides d'où un gain appréciable de productivité sur le chantier ;
- bien que le prix de revient du mètre linéaire du renfort conforme à l'invention soit plus élevé, cet accroissement du coût est compensé largement par une mise en place beaucoup plus rapide ;
- au cas où le plancher serait soumis, dans son plan horizontal, à des efforts ou sollicitations tendant à le déplacer en direction transversale aux entraits, la flexibilité ou élasticité relative éventuelle de lâme de chaque renfort perpendiculairement à son plan permettrait de réduire les contraintes ainsi subies par chaque entrait.

L'invention sera mieux comprise et d'autres buts, caractéristiques, détails et avantages de celle-ci apparaîtront plus clairement à la lecture de la description explicative qui va suivre en se reportant aux dessins schématiques annexés donnés uniquement à titre d'exemples non limitatifs illustrant divers modes de réalisation spécifiques actuellement préférés de l'invention et dans lesquels :

la figure 1 représente une vue isolée en section transversale du renfort conforme à l'invention ;

la figure 2 est une vue de côté en élévation de l'installation conforme à l'invention pour la fabrication du renfort selon la figure 1 ;

la figure 3 est une vue de dessus de l'installation représentée sur la figure 2 ;

la figure 4 est une vue en coupe transversale d'une solive composée de plancher, conforme à l'invention, comprenant une poutre en bois existante telle qu'un entrait de ferme et le renfort précité assemblé à cette poutre ;

la figure 5 représente une vue fragmentaire en coupe transversale d'une ossature partielle de plancher comportant une solive réhabilitée conformément à l'invention ;

la figure 6 est une vue en perspective arrachée d'une portion de comble restructuré conformément à l'invention ;

la figure 7 est une vue en coupe transversale du comble représenté sur la figure 6 ; et

la figure 8 est une vue partielle en coupe transversale selon la ligne de section VIII-VIII de la figure 7.

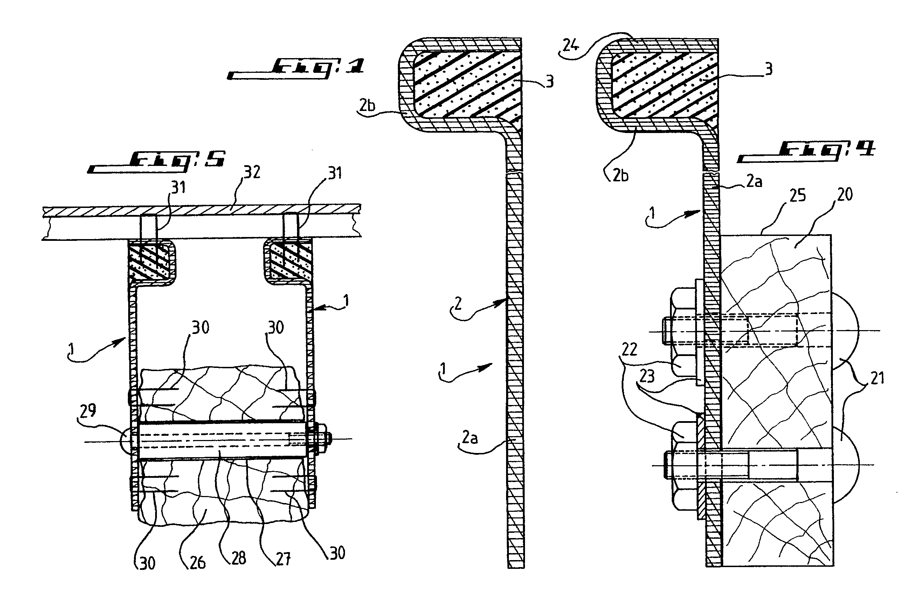

Selon l'exemple de réalisation représenté sur la figure 1, l'élément de renfort conforme à l'invention, désigné par le chiffre de référence 1, se compose essentiellement d'une plaque pleine allongée 2 d'épaisseur sensiblement constante comportant une partie plate ou plane 2a formant âme et une partie marginale 2b conformée en U ou auge sensiblement rectangulaire formant une nervure évidée orthogonalement en saillie unilatéralement sur une face latérale de la partie plate en formant ainsi une membrure dont les branches ou parois latérales parallèles opposées sont perpendiculaires au plan de ladite partie plate, tandis que sa paroi de fond est sensiblement parallèle à ce plan, la face terminale, en bout de la branche ou paroi libre, étant sensiblement située dans le plan de la face latérale de la partie plate qui est du côté opposé à ladite nervure.

L'évidement de cette nervure à fond plat parallèle au plan de l'âme est entièrement rempli d'un matériau de remplissage 3 intimement lié à la plaque 2.

Cet élément de renfort 1 est en matériau composite constitué par une matière plastique renforcée comprenant une phase filamentaire formant renfort répartie dans un liant formant matrice organique constituée par une résine synthétique armée par lesdites fibres de verre textile. La plaque 2 est constituée par un mat formé d'une nappe constituée de filaments ou de fibres de verre continus ou coupés, généralement distribués de façon aléatoire dans le plan et maintenus ensemble par une résine de liage. La masse de remplissage 3 est constituée par un matériau unitaire formé d'une résine synthétique dans laquelle sont répartis, de préférence uniformément, des fibres ou fils de verre textile à orientation uniforme en tous les points donc essentiellement unidirectionnels occupant par exemple environ 50 % en volume de la masse de remplissage. La membrure 2b forme ainsi une sorte de bourrelet ou de boudin plein.

A titre d'exemple purement indicatif, la plaque 2 a une épaisseur de 5 mm ; la largeur ou hauteur totale de l'élément de renfort 1 est de 300 mm ; la largeur de la masse de remplissage parallèlement aux parois latérales de la rainure la contenant est d'environ 35 mm pour une épaisseur ou hauteur (parallèlement au fond de la rainure) d'environ 20 mm.

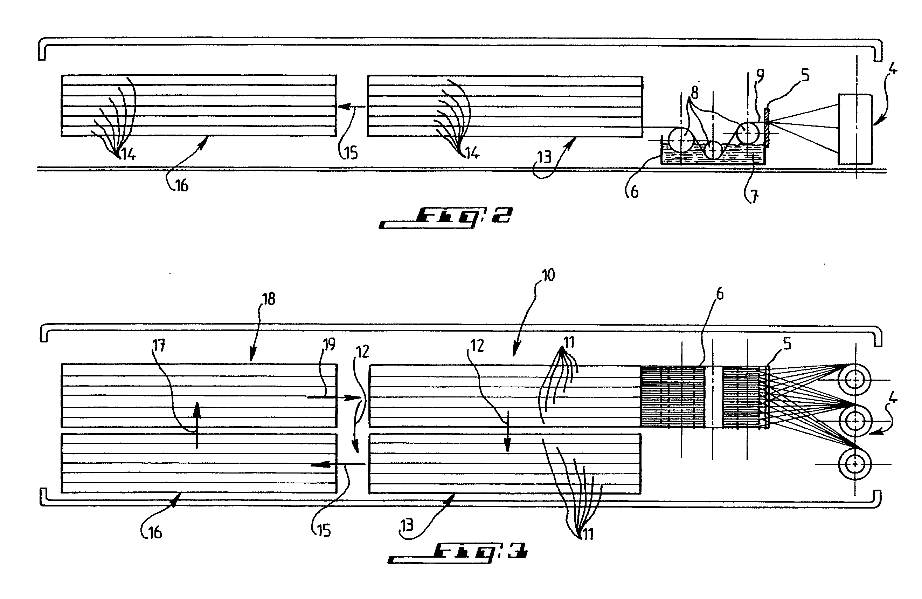

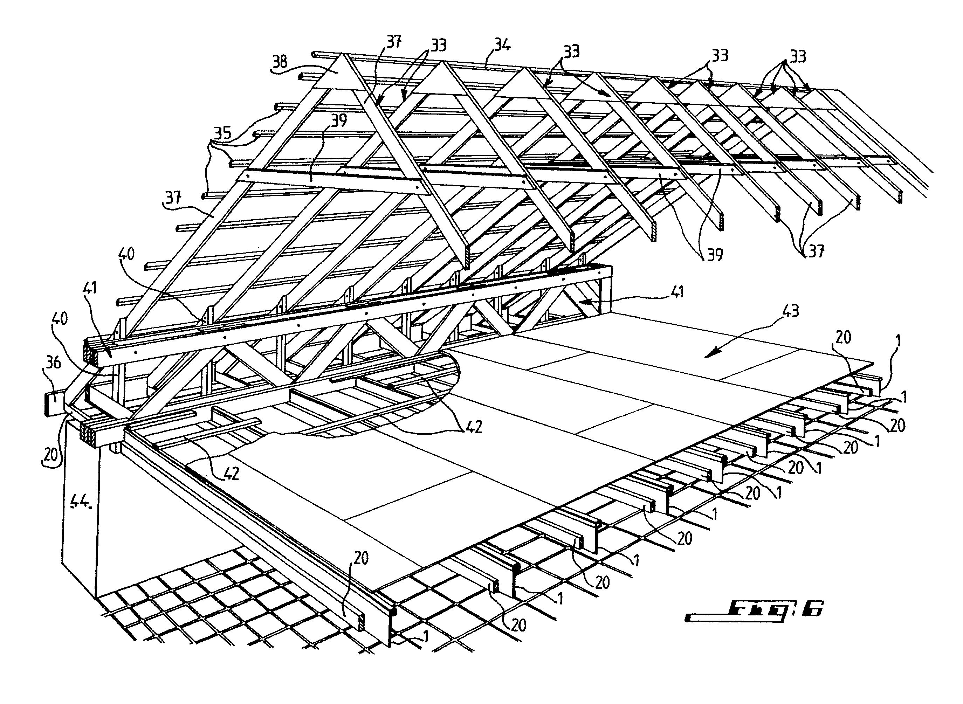

Les figures 2 et 3 représentent une installation de fabrication en série par moulage de l'élément de renfort 1 permettant une production en masse de celui-ci. Cette installation comprend :

- un poste de dévidage 4 comportant un groupe de bobines respectivement de mats et de fibres de verre unidirectionnelles, les bobines étant de préférence verticales et transversalement alignées éventuellement suivant plusieurs rangées décalées en quinconce ;

- un dispositif 5 de séparation, en plusieurs ensembles destinés chacun à servir d'armature fibreuse d'un renfort, des nappes combinées de mats et de fibres de verre déroulées desdites bobines le nombre de tels ensembles étant égal au nombre de moules à alimenter simultanément ;

- un bac d'immersion 6 rempli de résine synthétique 7 et comportant des rouleaux horizontaux transversaux parallèles 8 de guidage desdits ensembles 9 pour les plonger dans la résine afin de les imprégner ;

- un poste de moulage multiple 10 destiné à recevoir une batterie de plusieurs moules 11, par exemple au nombre de six, juxtaposés latéralement ou accolés selon un groupement horizontal, la batterie étant supportée par un châssis ou bâti commun ;

- des moyens 12 (symbolisés par la flèche sur la figure 3) de transfert latéral de chaque châssis porte-batterie de moules pleins du poste de moulage 10, par un déplacement transversal horizontal en translation rectiligne, à une station 13 d'empilement des châssis porte-batterie de moules garnis par gerbage les uns au-dessus des autres en un groupe de châssis superposés 14, par exemple au nombre de six châssis (figure 2), au moyen d'un dispositif élévateur ou ascenseur de châssis équipant cette station ;

- des moyens 15 (symbolises par une flèche) de translation rectiligne horizontale longitudinale de la pile de châssis porte-batterie de moules pleins 14 de la station d'empilement 13 à un poste 16 de polymérisation de la résine, placé en alignement longitudinal avec la station d'empilement 13 à la suite de celle-ci ;

- des moyens ou organes 17 (symbolisés par une flèche) de déplacement latéral de la pile de châssis porte-batterie de moules garnis, après polymérisation, par translation horizontale transversale, du poste de polymérisation 16 à une station 18 de démoulage et de palettisation des produits moulés, placée parallèlement à côté du poste de polymérisation 16 en alignement longitudinal avec le poste de moulage 10 à la suite de celui-ci et équipée d'un appareil descenseur ou abaisseur ; et

- des moyens de transfert longitudinal 19 (symbolisés par une flèche) pour amener chaque châssis porte-batterie de moules vides successivement un par un par un mouvement de translation horizontale rectiligne de la station de démoulage et de palettisation 18 au poste de moulage 10.

Le procédé, conforme à l'invention, pour la fabrication, par moulage, de l'élément de construction constituant le renfort conforme à l'invention, se compose de cycles périodiquement répétés d'opérations comprenant, chacun, les opérations successives suivantes consistant :

- à dérouler simultanément des fibres de verre textile unidirectionnelles conjointement avec des mats de fibres de verre depuis les bobines d'alimentation du poste de dévidage 4 ;
- à partager ou diviser ces nappes d'armature fibreuse en plusieurs ensembles distincts destinés à la confection en parallèle, d'un nombre égal d'éléments de renfort en faisant passer ces nappes à travers le dispositif de séparation 5 ;
- à imprégner simultanément ces ensembles de résine en faisant passer ces nappes sur les rouleaux 8 pour les plonger dans la résine 7 contenue dans le bac 6 ;
- à mouler, en concomitance, ces ensembles imprégnés en forme d'éléments de renfort respectifs par chargement dans la batterie de moules 11, de préférence juxtaposés ou accolés horizontalement, située au poste de moulage 10 ;
- à évacuer, par les moyens de transfert 12 après moulage, la batterie de moules garnis 11 du poste de moulage 10 vers la station d'attente 13 et à amener une batterie de moules vides au poste de moulage 10 ;
- à empiler successivement, à la station d'attente 13, les batteries de moules pleins, par élévation une par une au moyen de l'ascenseur, les unes sur les autres en superposition au fur et à mesure de leur arrivée ;
- à transporter la pile de batteries de moules garnis, par l'appareil de transfert 15, de la station d'empilement 13 au poste 16 de polymérisation de la résine ; et
- à transférer la pile de batteries de moules garnis, par les organes déplaceurs 17, du poste de polymérisation 16 à une station 18 de démoulage (par déchargement successif des batteries de la pile de bas en haut par abaissement échelonné au moyen du descenseur) et de palettisation des éléments de renfort moulés, les batteries de moules vidés devenant ainsi disponibles pour être ramenées et resservir une par une au poste de moulage 10 par l'appareil de transfert 19.

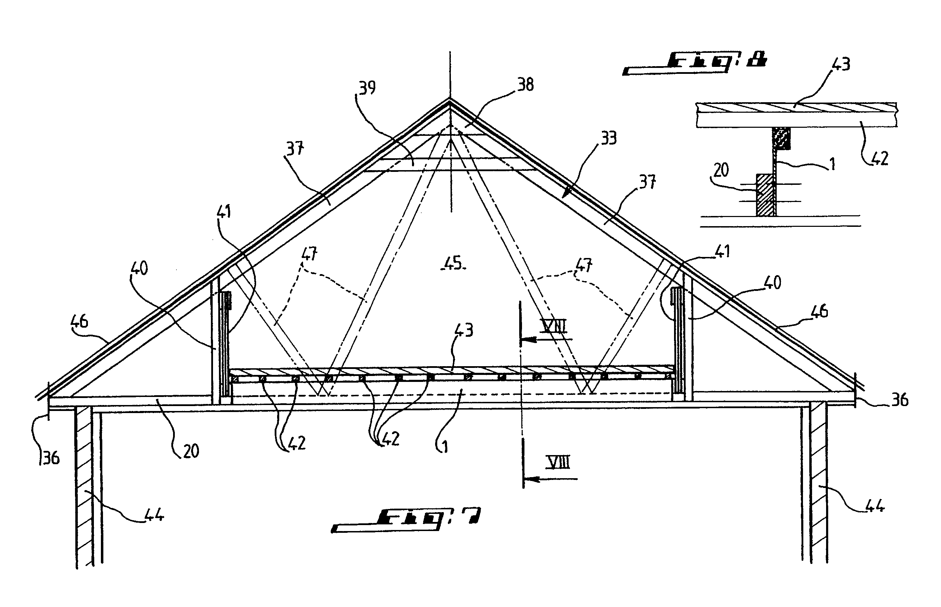

La figure 4 représente la coupe transversale d'une poutre composée constituée d'une poutre proprement dite 20 à renforcer, de préférence en bois, telle que notamment un entrait existant monté dans une ferme de charpente en bois de toiture de maison et de l'élément de renfort 1 précité fixé à la poutre 20 par exemple par boulonnage au moyen de rangées de boulons par exemple à tête ronde et à collet carré 21 pourvus d'écrous 22 et de rondelles d'appui 23 et traversant la poutre 20 et le renfort 1. Les boulons peuvent être ainsi disposés suivant deux rangées longitudinales parallèles transversalement espacées de boulons décalées en quinconce d'une rangée à l'autre, cette fixation pouvant éventuellement être complétée par un collage du renfort 1 contre la grande face longitudinale correspondante de la poutre parallélépipédique 20 à section transversale rectangulaire. La largeur ou hauteur de l'âme 2 du renfort 1 sera généralement supérieure à la largeur ou hauteur de la poutre 20. La poutre composée ainsi constituée forme donc une barre profilée comprenant une âme 2a constituée par l'âme du renfort 1 en matière composite, une membrure supérieure 2b, 3 constituée par le bourrelet ou boudin du renfort 1 et une membrure inférieure 20 constituée par la poutre proprement dite à renforcer. Dans le cas où cette poutre composée est destinée à servir de solive de plancher horizontale, elle sera orientée de façon que sa membrure 2b, 3 soit située vers le haut et la face supérieure plane 24 de cette membrure supérieure servira de semelle ou d'aile d'appui recevant les lambourdes ou gîtes de plancher.

Sur la figure 4, la membrure supérieure est orientée latéralement du côté opposé à la poutre en bois 20 par rapport à l'âme 2a lorsque cette poutre 20 est constituée par un entrait existant 20 sur la face étroite longitudinale horizontale supérieure 25 duquel sont fixées des contre-fiches de la ferme, afin de dégager ou de libérer ainsi l'espace au-dessus de l'entrait pour ces contre-fiches à supprimer ultérieurement après renforcement de l'entrait. Lorsque cette sujétion n'existe pas, c'est-à-dire lorsque l'espace au-dessus de l'entrait 20 est dégagé au moins sur la hauteur du renfort 1 dépassant de l'entrait vers le haut, il est avantageux d'assembler le renfort 1 à la poutre 20 en orientant la membrure supérieure 2b, 3 de façon qu'elle soit en saillie du même côté que la poutre 20 par rapport à l'âme 2a donc située au-dessus de la poutre pour obtenir une configuration de poutre composée en section transversale plus régulière des deux membrures respectivement haute et basse. Pour obtenir une configuration symétrique et un renforcement accru bilatéral de la poutre 20, il est avantageux de fixer deux tels renforts 1, symétriquement par rapport au plan médian vertical de la poutre, respectivement de part et d'autre de celle-ci contre les deux grandes faces latérales parallèles longitudinales opposées de la poutre en moisant ainsi cette dernière, les deux renforts constituant ainsi des moises.

La figure 5 représente, en coupe, un exemple de réhabilitation de vieux planchers comprenant un plancher ancien, usé et/ou détérioré ainsi qu'une vielle ossature de plancher abîmée avec le temps comprenant des vieilles solives en bois mal équarries ou partiellement pourries ou vermoulues.

Le procédé de réhabilitation consiste :
- à démonter, au moins partiellement, le vieux plancher et les vieilles lambourdes pour découvrir les vieilles solives 26 ;
- à percer éventuellement, sensiblement au niveau de la fibre neutre de la solive 26, des trous horizontaux transversalement traversants 27 longitudinalement espacés et répartis ;
- à monter, dans chaque trou 27, une entretoise cylindrique creuse tubulaire 28 de préférence dépassant légèrement de la solive 26 de chaque côté de celle-ci ;
- à fixer, à chaque solive 26, au moins un renfort 1 et de préférence deux renforts assemblés en configuration moisée par des boulons 29 traversant les entretoises respectives de façon à serrer l'âme du renfort 1 respectivement contre au moins les extrémités opposées correspondantes de l'entretoise 28 en complétant de préférence cette fixation par un agrafage au moyen d'agrafes 30 enfoncées dans le bois des solives 26 à travers les renforts 1 ou par un clouage correspondant;
- à remplacer les lambourdes anciennes par des lambourdes neuves posées sur les faces horizontales d'appui supérieures 24 des membrures supérieures des renforts 1 en fixant ces lambourdes par agrafage à ces membrures supérieures aux moyens d'agrafes 31 enfoncées à travers les lambourdes dans ces membrures ; et
- à poser un plancher neuf (parquet, carrelage ou dallage) 32 sur ces lambourdes neuves.

Sur la figure 5 les deux renforts 1 de la solive moisée 26 ont leurs membrures supérieures respectives orientées vers l'intérieur, c'est-à-dire l'une vers l'autre en étant ainsi disposées en saillie au-dessus de la solive, d'où une configuration régulière moins encombrante de la poutre ainsi composée.

Sur la figure 4, le renforcement de la poutre 20 suppose évidemment le perçage préalable des trous de passage de boulons à travers cette poutre et à travers l'âme 2a du renfort 1 en matière composite. Selon une variante, les trous de boulonnage, dans l'âme 2a du renfort 1, peuvent être préalablement réservés à l'avance lors de l'opération de moulage.

La figure 6 représente, en perspective arrachée, une vue partielle d'un comble aménagé mais sans les revêtements intérieurs muraux et de plafond, dans une charpente en bois de toiture à deux versants symétriques en dièdre saillant composé de fermettes 33, d'une panne faîtière 34, de pannes intermédiaires ou courantes 35 sur chaque rampant, d'une panne sablière ou poutre de rive 36 à l'extrémité basse de chaque versant. Les autres composants usuels de la charpente de toiture, tels que chevrons, liteaux ou lattes, voliges, etc... ont été omis par souci de simplification et de clarté du dessin.

Chaque fermette 33 se compose ici de deux arbalétriers 37 réunis au sommet par un gousset 38, d'un entrait élevé ou retroussé dit faux-entrait 39 entretoisant les arbalétriers et d'un entrait normal ou tirant 20, ainsi que d'une triangulation par contre-fiches non représentée sur la figure 6 car elle a été enlevée après renforcement des entraits 20 conformément à l'invention. Chaque fermette comporte également, de chaque côté, une jambette de force 40 montée ultérieurement et formant montant reliant l'entrait 20 à l'arbalétrier voisin 37. Cette structure est renforcée, de chaque côté longitudinal, par une poutre en bois en treillis 41 rapportée ultérieurement au cours des opérations de restructuration de la charpente. Au cours de ces opérations de restructuration, chaque entrait 20 en bois a été renforcé par un élément de renfort 1 en matière composite, de manière à former ainsi les solives de l'ossature porte-plancher de comble. Sur ces solives, c'est-à-dire sur les éléments de renfort 1 de celles-ci sont posées de lambourdes ou gîtes 42 parallèlement à la direction longitudinale des pannes donc transversalement aux solives 20, 1. Sur ces lambourdes est posé le plancher ou platelage 43 en matière naturelle ou artificielle (parquet en bois, carrelage, dallage, etc...).

Les fermettes reposent sur les deux murs porteurs longitudinaux parallèles opposés de la maison dont un seul 44 est représenté sur la figure 6.

Chaque élément de renfort en matière composite 1 s'étend seulement entre les deux poutres en treillis 41 d'une poutre à l'autre et non sur la longueur totale de l'entrait 20 associé.

La figure 7 est une vue en coupe transversale de la structure représentée sur la figure 6 et permettant de comprendre le procédé d'aménagement du comble 45 dans une maison individuelle à toiture à deux versants symétriques en dièdre saillant. Par mesure de simplification, les éléments fixes de charpente tels que les pannes n'ont pas été représentés sur la figure 7 où l'on a schématisé simplement la couverture de toiture 46. Sur cette figure 7 est visible seulement une fermette 33 avec sa triangulation à contre-fiches 47 à configuration en W, représentée par des lignes discontinues en traits mixtes sur la figure 7 car elle est destinée à être supprimée au cours des opérations d'aménagement du comble. Ces opérations d'aménagement sont destinées à restructurer la charpente de façon à lui permettre non seulement de supporter les charges existantes mais aussi les surcharges dues à l'aménagement et à l'utilisation du comble. Ces opérations d'aménagement consistent :

- à modifier chaque fermette notamment en renforçant ses arbalétriers 37 ainsi que le faîtage (par un gousset par exemple en contreplaqué) pour consolider et raidir l'assemblage des deux arbalétriers ;
- à monter, de chaque côté, une jambette de force 40 ;
- à fabriquer, sur place, deux poutres en bois en treillis 41 assemblées par exemple par agrafage et collage et s'étendant d'un mur pignon au mur-pignon opposé en venant reposer sur ces murs-pignon et éventuellement sur un ou plusieurs poteaux intermédiaires par exemple métalliques, chaque poutre en treillis horizontale 41 étant fixée d'une part contre les jambettes de force 40 correspondantes et d'autre part aux entraits 20 pour contribuer à soutenir ou supporter ceux-ci ;
- à renforcer chaque entrait 20 par un élément de renfort 1 précité assemblé à cet entrait et s'étendant entre les deux poutres en treillis 41 d'une poutre à treillis à l'autre ;
- à supprimer la structure triangulée en W à contre-fiches 47 ;
- à poser les lambourdes 42 sur les membrures supérieures des éléments 1 de renfort d'entrait ; et
- à poser le plancher ou platelage 43 sur ces lambourdes entre les deux poutres en treillis 41.

La figure 8 représente une vue partielle, en coupe transversale, d'un entrait 20 ainsi renforcé par l'élément de construction 1 conforme à l'invention qui supporte des lambourdes 42 portant elles-mêmes le plancher 43.

Entre les entraits ainsi renforcés, il est possible de prévoir des voutains ou hourdis de remplissage, par exemple en plâtre, en briques ou en d'autres matériaux équivalents comme cela est bien connu en soi dans la technique.

L'élément de renfort en matière composite conforme à l'invention est utilisable également dans toutes les applications nécessitant le renforcement d'un élément de structure, tel qu'une poutre en bois en général existant à l'état monté et permettant un bon assemblage de la pièce en bois avec l'élément de renfort en matériau composite. Cet élément de renfort est ainsi utilisable parfaitement pour le renforcement des pannes de charpente de toiture ainsi que des arbalétriers de ferme.

Bien entendu, l'invention n'est nullement limitée aux modes de réalisation décrits et représentés qui n'ont été donnés qu'à titre d'exemples purement illustratifs. Elle comprend également tous les équivalents techniques des moyens décrits ainsi que leurs combinaisons conformes à l'esprit et au cadre des revendications annexées.

## Revendications

1. Elément de construction (1) destiné en particulier à être rapporté sur une poutre sensiblement rectiligne existante notamment en bois (20, 26) pour accroître sa résistance mécanique à la flexion, du type en barre droite à section transversale profilée uniforme comprenant une âme plate (2a) bordée d'un côté par une membrure (2b, 3) unilatéralement saillante sensiblement perpendiculairement sur une face de l'âme (2a), caractérisé en ce qu'il est constitué en matériau composite comportant une plaque allongée ou bande (2) en matière synthétique armée d'au moins une nappe de fibres artificielles, à contour apparent latéral au moins approximativement rectangulaire, comprenant une partie plate (2a) à faces parallèles opposées sensiblement planes formant ladite âme, délimitée, d'un côté, par une partie marginale formant rebord conformée en nervure creuse (2b) formant ladite membrure à concavité ouverte, à section transversale par exemple sensiblement rectangulaire en forme de crochets en U dont les deux branches parallèles sensiblement de même longueur sont perpendiculaires au plan de face latérale de la partie plate (2a) de préférence sans dépasser de la face plane de partie plate opposée à la convexité de ladite nervure (2b) en formant ainsi une rainure dont l'évidement est rempli par un boudin notamment sensiblement parallèlépipédique (3) formé par une masse de matière synthétique renforcée de fibres artificielles unidirectionnelles réparties dans ladite masse et parallèles à la direction longitudinale de ladite nervure (2b), cette masse de remplissage (3) étant solidaire de ladite plaque (2).

2. Elément de construction selon la revendication 1, caractérisé en ce que la plaque précitée (2) est en matière plastique renforcée à base de mat de fibres de verre textile ou analogues agglomérées par de la résine polyester, phénolique ou équivalente tandis que la masse de remplissage précitée (3) est de préférence a base de ladite résine renforcée par des fibres de verre textile occupant de préférence environ 50 % en volume de ladite masse.

3. Procédé de fabrication, par moulage, de l'élément de construction (1), selon la revendication 2, caractérisé par des cycles périodiquement répétés d'opérations comprenant chacun les opérations successives suivantes consistant :

- à dérouler simultanément des fibres de verre textile unidirectionnelles conjointement avec des mats de fibres de verre et à les partager en plusieurs ensembles distincts (9) destinés à la confection, en parallèle, d'un nombre égal d'éléments de construction (1) ;
- à imprégner simultanément ces ensembles (9) de résine (7) ;

- à mouler, en concomitance, ces ensembles imprégnés en forme d'éléments de construction respectifs (1) par chargement dans une batterie de moules (11) de préférence transversalement juxtaposés ou accolés horizontalement, située à un poste de moulage (10) ;

- à évacuer, après moulage, la batterie de moules garnis (11) du poste de moulage (10) vers une station d'attente (13) et à amener une batterie de moules vides au poste de moulage (10) ;

- à empiler successivement, à la station d'attente (13), par élévation une par une, les batteries de moules pleins les unes sur les autres en superposition au fur et à mesure de leur arrivée ;

- à transporter la pile (14) de batteries de moules garnis à un poste (16) de polymérisation de la résine (7) ; et

- à transférer la pile (14) de batteries de moules garnis à une station (18) de démoulage (par déchargement successif des batteries de la pile de bas en haut par descente échelonnée) et de palettisation des éléments de construction moulés (1), les batteries de moules vides (11) devenant ainsi disponibles pour être retournées et resservir une par une au poste de moulage (10).

4. Installation pour l'exécution du procédé selon la revendication 3, caractérisée en ce qu'elle comprend :

- un poste de dévidage (4) comportant un groupe de bobines notamment verticales respectivement de mats et de fibres de verre unidirectionnelles ;

- un dispositif (5) de séparation des nappes combinées de mats et de fibres de verre déroulées en plusieurs ensembles (9) ;

- un bac d'immersion (6) rempli de résine synthétique (7) et comportant des rouleaux horizontaux transversaux parallèles (8) de guidage desdits ensembles pour imprégnation de ceux-ci ;

- un poste de moulage multiple (10) destiné à recevoir une batterie de plusieurs moules (11) juxtaposés latéralement ou accolés horizontalement, supportée par un châssis commun ;

- des moyens (12) de transfert latéral de chaque châssis porte-batterie de moules pleins du poste de moulage (10) à

- une station (13) d'empilement des châssis porte-batterie de moules garnis, placée parallèlement à côté du poste de moulage (10) et équipé d'un dispositif ascenseur, élévateur des châssis porte-batterie de moules pleins (14) ;

- des moyens (15) de translation horizontale longitudinale de la pile (14) de châssis porte-batterie de moules garnis de la station d'empilement (13) à

- un poste de polymérisation (16) placé en alignement longitudinal à la suite de la station d'empilement (13);

- des moyens (17) de translation horizontale transversale de la pile (14) de châssis porte-batterie de moules pleins, après polymérisation, du poste de polymérisation (16) à

- une station (18) de démoulage et de palettisation des produits moulés (1), placée parallèlement au côté du poste de polymérisation (16) en alignement longitudinal avec le poste de moulage (10) à la suite de celui-ci et équipé d'un appareil descenseur ; et

- des moyens (19) de translation horizontale longitudinale de chaque châssis porte-batterie de moules vides (11) de la station de démoulage (18) vers le poste de moulage (10).

5. Utilisation de l'élément de construction (1) selon la revendication 2 pour renforcer une poutre de préférence en bois (20, 26) existante déjà à l'état monté notamment de charpente de toiture d'un bâtiment ou édifice analogue pour l'aménagement du comble (45) en espace de logement habitable ou de rangement par modification et restructuration de ladite charpente (33-40).

6. Utilisation selon la revendication 5, dans une maison individuelle à toiture notamment à deux ou quatre versants de préférence symétriques en dièdre saillant, supportée par une charpente en bois à fermettes (33) notamment triangulées par exemple en W par contre-fiches (47), pour renforcer, en particulier, les entraits (20) au moins sur leur longueur portante utilisable pour les rendre aptes à servir de solives de plancher (43) avant suppression des contre-fiches (47) nécessaire au dégagement d'un volume intérieur libre utilisable en logement ou rangement.

7. Utilisation de l'élément de construction (1) selon la revendication 2, dans la réhabilitation de planchers anciens soit pour renforcer des solives en bois anciennes mal équarries ou détériorées (26) ou pour reconstituer la matière (bois) manquante de pièces de structure éventuellement disparue par endroits en raison de la vétusteté ou pour renforcer des solives métalliques détériorées par corrosion.

8. Poutre existante formant notamment entrait en bois (20) renforcée en application de l'utilisation selon l'une des revendications 5 à 7, caractérisée en ce qu'elle comporte une membrure inférieure constituée par ladite poutre proprement dite (20) et au moins un renfort (1) constitué par l'élément de construction selon la revendication 1 ou 2, assemblé par son âme (2a) à ladite poutre en bois contre une grande face latérale longitudinale de celle-ci à l'aide de moyens de fixation tels que boulons (21, 29) et/ou agrafes (30) et/ou clous et/ou collage.

9. Poutre selon la revendication 8, caractérisée par deux renforts précités jumelés en moises en étant fixés respectivement aux deux grandes faces latérales parallèles longitudinales opposées de ladite poutre (20).

EP 0 412 910 A1

_Fig. 1_

_Fig. 5_

_Fig. 4_

3

2b

2b

2a

2

1

24

25

20

22

23

21

30

30

29

26 28 27 30

31 32 31

Fig.2

Fig.3

Fig. 6

*Fig. 8*

*Fig. 7*

EP 0 412 910 A1

**Office européen
des brevets**

**RAPPORT DE RECHERCHE
EUROPEENNE**

Numéro de la demande

**EP 90 40 2280**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 255 875   (H. TIERNEY) <br> * colonne 3, ligne 72 - colonne 4, ligne 11; figure 2 * <br> – – – | 1 | E 04 C 3/28 <br> E 04 G 23/02 <br> B 29 C 67/14 <br> B 29 C 33/36 |
| A | DE-A-1 704 670   (C. FIETZEK) <br> * page 3, lignes 3 - 8; figures 1, 2 * <br> – – – | 1 | |
| A | FR-A-2 502 064   (VETROTEX SAINT-GOBAIN) <br> * page 2, lignes 16 - 21 * * page 4, ligne 17 - page 5, ligne 7; figures 3, 4 * <br> – – – | 1 | |
| A | CA-A-9 578 21   (F. TAYLOR) <br> * figures 8, 9 * <br> – – – – – | 1 | |

| DOMAINES TECHNIQUES RECHERCHES (Int. Cl.5) |
|---|
| E 04 C <br> E 04 G <br> B 29 C |

Le présent rapport de recherche a été établi pour toutes les revendications

| Lieu de la recherche | Date d'achèvement de la recherche | Examinateur |
|---|---|---|
| La Haye | 14 novembre 90 | KRIEKOUKIS S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant